# EUROPEAN PATENT APPLICATION

(11) **EP 4 531 131 A1**
(43) Date of publication of application: **02.04.2025**
(21) Application number: 23875221.6
(22) Date of filing: 05.10.2023
(51) Int. Cl.: H01M 4/131, H01M 4/525, H01M 4/505, H01M 4/1391, H01M 4/02

(54) **POSITIVE ELECTRODE AND SECONDARY BATTERY**

(30) Priority: 07.10.2022 KR 20220128886; 04.10.2023 KR 20230131799
(71) Applicant: LG Energy Solution, Ltd., Seoul 07335 (KR)
(72) Inventor: KIM, Minsoo, Daejeon 34122 (KR); BAEK, Sora, Daejeon 34122 (KR); KIM, Shulkee, Daejeon 34122 (KR); PARK, Kyutae, Daejeon 34122 (KR); PIAO, Lilin, Daejeon 34122 (KR); YOO, Kwang Ho, Daejeon 34122 (KR); LEE, Gyeongseop, Daejeon 34122 (KR); JUNG, Wonhee, Daejeon 34122 (KR)
(74) Representative: Plasseraud IP
(86) International application number: PCT/KR2023/015284
(87) International publication number: WO 2024/076158

(57) **Abstract**

The present invention relates to a secondary battery including a positive electrode for a secondary battery, the positive electrode including: a current collector; a first positive electrode active material layer provided on the current collector; and a second positive electrode active material layer provided on the first positive electrode active material layer, wherein the first positive electrode active material layer and the second positive electrode active material layer each include a single particle positive electrode active material and a positive electrode active material with a larger particle diameter than that of the single particle positive electrode active material, and wherein a porosity of the first positive electrode active material layer is different from a porosity of the second positive electrode active material layer or a pore area ratio in a cross-sectional image of the second positive electrode active material layer is 1.05 to 3 times a pore area ratio in a cross-sectional image of the first positive electrode active material layer, and a method for manufacturing a positive electrode for a secondary battery.

## Description

### [Technical Field]

This application claims priority to and the benefit of Korean Patent Application No. 10-2022-0128886 filed in the Korean Intellectual Property Office on October 7, 2022, and Korean Patent Application No. 10-2023-0131799 filed in the Korean Intellectual Property Office on October 4, 2023, the entire contents of which are incorporated herein by reference.

The present invention relates to a positive electrode for a secondary battery and a secondary battery including the same.

### [Background Art]

A secondary battery is universally applied not only to a portable device, but also to an electric vehicle (EV) or a hybrid electric vehicle (HEV) that is driven by an electrical driving source.

The secondary battery is attracting attention as a new energy source to improve eco-friendliness and energy efficiency because of the primary advantage that the use of fossil fuels can be dramatically reduced and the advantage that no by-products are generated from the use of energy.

In general, a secondary battery includes a positive electrode, a negative electrode, a separator interposed between the positive electrode and the negative electrode, an electrolyte, and the like. In addition, the electrode such as a positive electrode and a negative electrode may have an electrode active material layer provided on a current collector.

As utilization of the secondary battery increases, various battery performances are required. For improvement in battery performance, attempts are being made to control a composition of an active material of a positive electrode or negative electrode active material layer or an additive. However, a wrong combination of materials may have an adverse effect on the performance of the final battery. Accordingly, research on improving battery performance with a combination of materials for a positive electrode and a negative electrode is necessary.

### [Detailed Description of the Invention]

### [Technical Problem]

The present invention has been made in an effort to provide a positive electrode for a secondary battery that can provide improved energy density, rapid charging performance, and improved life performance of the battery, and a secondary battery including the same.

### [Technical Solution]

An exemplary embodiment of the present invention provides a positive electrode for a secondary battery including: a current collector; a first positive electrode active material layer provided on the current collector; and a second positive electrode active material layer provided on the first positive electrode active material layer, wherein the first positive electrode active material layer and the second positive electrode active material layer each include a single particle positive electrode active material and a positive electrode active material with a larger particle diameter than that of the single particle positive electrode active material, and wherein a porosity of the first positive electrode active material layer is different from a porosity of the second positive electrode active material layer.

Another exemplary embodiment of the present invention provides a positive electrode for a secondary battery including: a current collector; a first positive electrode active material layer provided on the current collector; and a second positive electrode active material layer provided on the first positive electrode active material layer, wherein the first positive electrode active material layer and the second positive electrode active material layer each include a single particle positive electrode active material and a positive electrode active material with a larger particle diameter than that of the single particle positive electrode active material, and wherein a pore area ratio in a cross-sectional image of the second positive electrode active material layer is 1.05 to 3 times a pore area ratio in a cross-sectional image of the first positive electrode active material layer.

Still another exemplary embodiment of the present invention provides a secondary battery including the positive electrode for a secondary battery described above, a negative electrode, and a separator.

### [Advantageous Effects]

According to the exemplary embodiments described in the present specification, the positive electrode active material layer has a two-layer structure and the resistance characteristics of the battery can be improved by controlling a type of active material and a porosity of each layer.

### [Brief Description of Drawings]

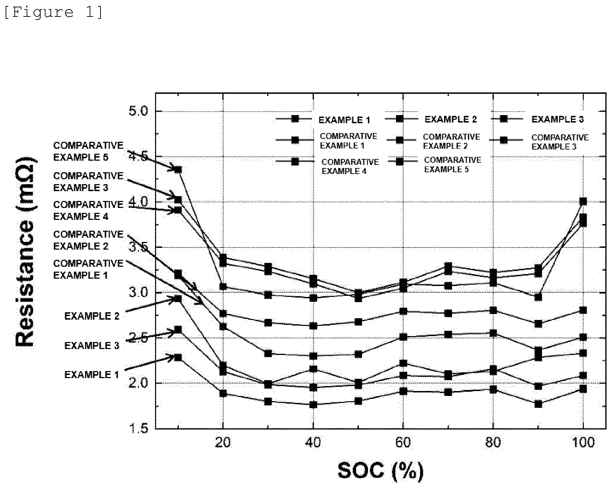

FIG. 1 is a graph showing resistance characteristics as a function of state of charge (SOC) of batteries prepared in Examples and Comparative Examples.

### [Best Mode]

Hereinafter, the present invention will be described in more detail for better understanding of the present invention. The present invention can be variously implemented and is not limited to the following exemplary embodiments. The terms or words used throughout the specification and the claims should not be construed as being limited to their ordinary or dictionary meanings, but construed as having meanings and concepts consistent with the technical idea of the present invention, based on the principle that an inventor may properly define the concepts of the words or terms to best explain the invention.

It will be further understood that the terms "comprises", "includes" or "have" when used in the present specification specify the presence of stated features, integers, steps, constitutional elements and/or combinations thereof, but do not preclude the presence or addition of one or more other features, integers, steps, constitutional elements, and/or combinations thereof.

Further, it will be understood that when an element such as a layer is referred to as being "on" another element, it can be "directly on" the other element or an intervening element may also be present. In contrast, when an element is referred to as being "directly on" another element, there are no intervening elements present. Further, when an element is referred to as being "on" a reference portion, the element is positioned above or below the reference portion, and it does not necessarily mean that the element is positioned "above" or "on" in a direction opposite to gravity.

In the present specification, descriptions referred to only as "positive electrode active material layer" without first and second expressions may be applied to both the first and second positive electrode active material layers.

In the present specification, the term 'particle diameter' refers to an average particle diameter indicated by D50. D50 can be defined as a particle size at 50% of a particle size distribution, and can be measured using a laser diffraction method. For example, a method for measuring an average particle diameter (D50) of the positive electrode active material may include dispersing particles of the positive electrode active material in a dispersion medium, introducing the dispersion into a commercially available laser diffraction particle size measuring device (e.g., Microtrac MT 3000), irradiating the dispersion with ultrasonic waves of approximately 28 kHz with an output of 60 W, and then calculating an average particle diameter (D50) corresponding to 50% of the cumulative volume in the measuring device.

In the present specification, the term 'primary particle' refers to a particle that does not appear to have grain boundaries when observed at a field of view of 5,000 to 20,000 times using a scanning electron microscope.

In the present specification, the term 'secondary particle' refers to a particle formed by agglomeration of the primary particles.

In the present specification, the single particle is a term used to distinguish the same from a positive electrode active material particle in the form of a secondary particle resulting from agglomeration of tens to hundreds of primary particles generally used in the related art, and is a concept including a single particle consisting of one primary particle and an agglomerate particle of 10 or less primary particles.

In the present specification, when referring to 'particle', it may mean any one or all of a single particle, a secondary particle, and a primary particle.

An exemplary embodiment of the present invention provides a positive electrode for a secondary battery including: a current collector; a first positive electrode active material layer provided on the current collector; and a second positive electrode active material layer provided on the first positive electrode active material layer, wherein the first positive electrode active material layer and the second positive electrode active material layer each include a single particle positive electrode active material and a positive electrode active material with a larger particle diameter than that of the single particle positive electrode active material, and wherein a porosity of the first positive electrode active material layer is different from a porosity of the second positive electrode active material layer.

Another exemplary embodiment of the present invention provides a positive electrode for a secondary battery including: a current collector; a first positive electrode active material layer provided on the current collector; and a second positive electrode active material layer provided on the first positive electrode active material layer, wherein the first positive electrode active material layer and the second positive electrode active material layer each include a single particle positive electrode active material and a positive electrode active material with a larger particle diameter than that of the single particle positive electrode active material, and wherein a pore area ratio in a cross-sectional image of the second positive electrode active material layer is 1.05 to 3 times a pore area ratio in a cross-sectional image of the first positive electrode active material layer.

In the above exemplary embodiments, the positive electrode has a structure in which the positive electrode active material layer is two layers, includes a single particle positive electrode active material in each layer, and also includes two types of positive electrode active materials with different particle diameters. In addition to this, the porosity of the first positive electrode active material layer is different from the porosity of the second positive electrode active material layer. Preferably, the porosity of the first positive electrode active material layer is smaller than the porosity of the second positive electrode active material layer.

In this way, the porosity of the first positive electrode active material layer arranged closest to the current collector among the positive electrode active material layers of the two-layer structure including the above-mentioned positive electrode active materials is made smaller, making it possible to improve the resistance characteristics of the positive electrode. As the porosity of the positive electrode active material layer increases or decreases, the pore area ratio in the cross-sectional image of the positive electrode active material layer also increases or decreases. Therefore, when the pore area ratio in the cross-sectional image of the first positive electrode active material layer is made smaller than the pore area ratio in the cross-sectional image of the second positive electrode active material layer, the effect of improving the resistance characteristics of the positive electrode described above can be similarly obtained. The porosity or pore area ratio in the cross-sectional image as described above can be achieved by the materials of each layer described above and a manufacturing method described below.

According to an exemplary embodiment of the present specification, the first and second positive electrode active material layers each include a single particle positive electrode active material and a positive electrode active material with a larger particle diameter than that of the single particle positive electrode active material. Here, the positive electrode active material with a larger particle diameter than that of the single particle positive electrode active material exists in a state of a secondary particle, meaning that a particle diameter of the secondary particle is larger than the particle diameter of the single particle positive electrode active material. In the present specification, a positive electrode active material with a larger particle diameter than that of the single particle positive electrode active material is referred to as a large particle positive electrode active material for convenience.

According to an exemplary embodiment, the large particle positive electrode active material may have a particle diameter that is 2 to 15 µm, for example, 3 to 10 µm larger than that of the single particle positive electrode active material.

According to an exemplary embodiment, the particle diameter of the large particle positive electrode active material may be 5 to 15 µm, and the particle diameter of the single particle positive electrode active material may be 2 to 7 µm.

According to an exemplary embodiment, a content ratio of the single particle positive electrode active material and the positive electrode active material with a larger particle diameter than that of the single particle positive electrode active material in the second positive electrode active material layer may be 1:9 to 9:1.

According to an exemplary embodiment, the porosity of the first positive electrode active material layer may be 0.5% to 25%, for example, 0.5 to 20%, specifically 1% to 10% smaller than the porosity of the second positive electrode active material layer.

For example, the porosities of the first and second positive electrode active material layers may be 15% to 40%, respectively.

Here, as for the porosity, the porosities of the first positive electrode active material layer and the second positive electrode active material layer can be computationally calculated by measuring a weight per an electrode area with an electronic scale and measuring a cross-sectional thickness of each layer with a scanning electron microscope.

According to an exemplary embodiment, the pore area ratio of the second positive electrode active material layer may be 1.1 to 2.8 times, 1.3 to 2.8 times, or 1.5 to 2.5 times the pore area ratio in the cross-sectional image of the first positive electrode active material layer.

Here, the pore area ratios in the cross-sectional image of the first positive electrode active material layer and the second positive electrode active material layer are calculated by producing a cross-sectional sample in a direction perpendicular to a surface direction from an electrode sample through the following method and calculating an image obtained after setting a magnification of 1.00k to 2.00k and measuring the cut surface with an acceleration voltage of 5 kV through a scanning electron microscope.

At this time, when producing the cross-sectional sample, PDMS resin was used and dried at room temperature for 48 hours under reduced pressure conditions. Thereafter, Ar+ Ion milling was performed at an acceleration voltage of 6kV using Hitachi IM5000 to produce the cross-sectional sample.

If the porosity range described above is satisfied, the effect of lowering the interfacial resistance can be expected by lowering the porosity of the first positive electrode active material layer to improve the contact between the current collector and the positive electrode active material. In addition, since the porosity of the second positive electrode active material layer can be relatively increased, impregnation of the electrolyte solution is facilitated, and an advantageous effect on the electrode life can be obtained.

In addition, when the pore area ratios in the cross-sectional images described above are satisfied, the pore area ratio in the cross-sectional image of the second positive electrode active material layer has a larger value than the pore area ratio in the cross-sectional image of the first positive electrode active material layer. As described above, when the porosity of the positive electrode active material layer increases or decreases, the pore area ratio in the cross-sectional image of the positive electrode active material layer also increases or decreases, so the advantages obtained when the above porosity range is satisfied can be obtained.

According to an exemplary embodiment, a content of the single particle positive electrode active material in the first positive electrode active material layer may be greater than a content of the single particle positive electrode active material in the second positive electrode active material layer. Thereby, the porosity of the first positive electrode active material layer can be controlled to be lower than that of the second positive electrode active material layer.

Specifically, a content ratio of the single particle positive electrode active material and the positive electrode active material with a larger particle diameter than that of the single particle positive electrode active material in the first positive electrode active material layer may be 5:5 to 9:1, for example, 6:4 to 9:1, or 7:3 to 9:1, and a content ratio of the single particle positive electrode active material and the positive electrode active material with a larger particle diameter than that of the single particle positive electrode active material in the second positive electrode active material layer may be 1:9 to 5:5, for example, to 1:9 to 4:6, or 1:9 to 3:7.

When the above range is satisfied, the single particles that are advantageous for forming a low porosity is applied to the first positive electrode active material layer at a high content ratio, and large particles that can be applied without breakage due to high porosity is applied to the second positive electrode active material layer at a high content ratio, resulting in lowering the diffusion resistance.

According to an exemplary embodiment, the single particle or large particle positive electrode active material may include a lithium composite transition metal compound including nickel (Ni) and cobalt (Co). The lithium composite transition metal compound may further include at least one of manganese and aluminum. The lithium composite transition metal compound may include 80 mol% or more, for example, 80 mol% or more and less than 100 mol% of nickel among metals other than lithium. For example, the lithium composite transition metal compound may be a positive electrode active material represented by LiₐNi_{(1-x-y)}CoₓM1_{y}M2_{w}O₂ (1.0≤a≤1.5, 0<x≤0.2, 0≤y≤0.2, 0≤w≤0.1, 0<x+y≤0.2, M1 is one or more metals selected from Mn and Al, and M2 is one or more metal elements selected from the group consisting of Ba, Ca, Zr, Ti, Mg, Ta, Nb, and Mo).

Thicknesses of the first and second positive electrode active material layers may be 10 µm or greater and 500 µm less, respectively.

The positive electrode active material may be included in an amount of 80 part by weight or more and 99.9 parts by weight or less, and preferably 80 parts by weight or more and 99 parts by weight or less, on the basis of 100 parts by weight of the positive electrode active material layer.

According to a further exemplary embodiment of the present specification, the positive electrode active material layer according to the exemplary embodiment described above may further include a positive electrode binder and a conductive material.

The positive electrode binder may serve to improve adhesion between particles of the positive electrode active material and adhesive force between particles of the positive electrode active material and the positive electrode current collector. For the positive electrode binder, those known in the art may be used. Non-limiting examples thereof may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, various copolymers thereof, and the like, and any one thereof or a mixture of two or more thereof may be used.

The positive electrode binder may be included in an amount of 0.1 part by weight or more and 50 parts by weight or less, for example, preferably 0.3 part by weight or more and 35 parts by weight or less, and more preferably 0.5 part by weight or more and 20 parts by weight or less on the basis of 100 parts by weight of the positive electrode active material layer.

The conductive material included in the positive electrode active material layer is used to impart conductivity to the electrode, and can be used without particular limitation as long as the conductive material has electronic conductivity without causing a chemical change in a battery. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

Specifically, in an exemplary embodiment, the conductive material may include one or more of a single-walled carbon nanotube (SWCNT) and a multi-walled carbon nanotube (MWCNT). The conductive material may be included in an amount of 0.1 part by weight or more and 5 parts by weight or less, for example, preferably 0.3 part by weight or more and 3 parts by weight or less, and more preferably 0.5 part by weight or more and 2 parts by weight or less on the basis of 100 parts by weight of the composition for a positive electrode active material layer.

The positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector may typically have a thickness of 1 to 500 µm, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

An additional exemplary embodiment of the present specification provides a secondary battery including the positive electrode according to the above-described exemplary embodiments, a negative electrode, and a separator.

The negative electrode may include a current collector and a negative electrode active material layer provided on the current collector.

According to an exemplary embodiment, the negative electrode includes a silicon-based active material.

In an exemplary embodiment, the silicon-based active material includes at least one of SiOₓ (0≤x<2), SiM_{y} (M is metal, 1≤y≤4), and Si/C. The silicon-based active material may include only one type, or two or more types together.

The active material including SiOx (0≤x<2) as the silicon-based active material may be a silicon-based composite particle including SiOₓ (0<x<2) and a pore.

The SiOx (0<x<2) corresponds to a matrix in the silicon-based composite particle. The SiOₓ(0<x<2) may be a form of including Si and SiO₂, and the Si may form a phase. That is, x corresponds to a ratio of the number of O to Si included in the SiOₓ(0<x<2). When the silicon-based composite particle includes the SiOₓ (0<x<2), a discharge capacity of a secondary battery can be improved.

The silicon-based composite particle may further include at least one of an Mg compound and a Li compound. The Mg compound and the Li compound may correspond to a matrix in the silicon-based composite particle.

The Mg compound and/or the Li compound may be present in the SiOx (0<x<2) and/or on a surface of the SiOx (0<x<2). The initial efficiency of the battery can be improved by the Mg compound and/or the Li compound.

The Mg compound may include at least one selected from the group consisting of Mg silicate, Mg silicide, and Mg oxide. The Mg silicate may include at least one of Mg₂SiO₄ and MgSiO₃. The Mg silicide may include Mg₂Si. The Mg oxide may include MgO.

In an exemplary embodiment of the present specification, the Mg element may be included in an amount of 0.1 wt% to 20 wt% or 0.1 wt% to 10 wt% on the basis of 100 wt% of a total of the silicon-based active material. Specifically, the Mg element may be included in an amount of 0.5 wt% to 8 wt% or 0.8 wt% to 4 wt%. When the above range is satisfied, the Mg compound can be included in an appropriate content in the silicon-based active material, so the volume change of the silicon-based active material during charging and discharging of the battery can be easily suppressed, and the discharge capacity and initial efficiency of the battery can be improved.

The Li compound may include at least one selected from the group consisting of Li silicate, Li silicide, and Li oxide. The Li silicate may include at least one of Li₂SiO₃, Li₄SiO₄ and Li₂Si₂O₅. The Li silicide may include Li₇Si₂. The Li oxide may include Li₂O.

In an exemplary embodiment of the present invention, the Li compound may include a form of lithium silicate. The lithium silicate is represented by LiₐSiₑO_{c}(2≤a≤4, 0<b≤2, 2≤c≤5) and may be divided into crystalline lithium silicate and amorphous lithium silicate. The crystalline lithium silicate may be present in the silicon-based composite particle in a form of at least one lithium silicate selected from the group consisting of Li₂SiO₃, Li₄SiO₄ and Li₂Si₂O₅, and the amorphous lithium silicate may be a form of LiₐSi_{b}O_{c} (2≤a≤4, 0<b≤2, 2≤c≤5) However, the present invention is not limited thereto.

In an exemplary embodiment of the present specification, the Li element may be included in an amount of 0.1 wt% to 20 wt% or 0.1 wt% to 10 wt% on the basis of 100 wt% of a total of the silicon-based active material. Specifically, the Li element may be included in an amount of 0.5 wt% to 8 wt%, and more specifically, 0.5 wt% to 4 wt%. When the above range is satisfied, the Li compound can be included in an appropriate content in the silicon-based active material, so the volume change of the negative electrode active material during charging and discharging of the battery can be easily suppressed, and the discharge capacity and initial efficiency of the battery can be improved.

The content of the Mg element or Li element can be confirmed through ICP analysis. For the ICP analysis, a predetermined amount (about 0.01 g) of a negative electrode active material is precisely aliquoted, transferred to a platinum crucible, and completely decomposed on a hot plate by adding nitric acid, hydrofluoric acid and sulfuric acid thereto. Then, by using an inductively coupled plasma atomic emission spectrometer (ICP-AES, Perkin-Elmer 7300), a reference calibration curve is obtained by measuring the intensity of a standard liquid, which has been prepared using a standard solution (5 mg/kg), at an intrinsic wavelength of the Mg element or Li element. Subsequently, a pre-treated sample solution and a blank sample are introduced into the spectrometer, and by measuring the intensity of each component to calculate an actual intensity, calculating the concentration of each component based on the obtained calibration curve, and then performing a conversion such that the sum of the calculated concentrations of the components is equal to a theoretical value, the Mg element or Li element content in the prepared silicon-based active material can be analyzed.

In an exemplary embodiment of the present specification, a carbon layer may be provided on a surface of the silicon-based composite particle and/or inside the pore. Conductivity is imparted to the silicon-based composite particle by the carbon layer, so that the initial efficiency, life characteristics, and battery capacity characteristics of a secondary battery including the negative electrode active material including the silicon-based composite particle can be improved. A total amount of the carbon layer included may be 5 wt% to 40 wt% on the basis of 100 wt% of a total of the silicon-based composite particle.

In an exemplary embodiment of the present specification, the carbon layer may include at least one of amorphous carbon or crystalline carbon.

An average particle diameter (D50) of the silicon-based active material may be 2 µm to 15 µm, specifically 3 µm to 12 µm, and more specifically 4 µm to 10 µm. When the above range is satisfied, a side reaction between the silicon-based composite particle and the electrolyte solution is controlled, and the discharge capacity and initial efficiency of the battery can be effectively implemented.

In the present specification, the average particle diameter (D50) may be defined as a particle diameter corresponding to 50% of the cumulative volume in the particle diameter distribution curve of particles. The average particle diameter (D50) may be measured using, for example, a laser diffraction method. In the laser diffraction method, in general, particle diameters ranging from a submicron range to several millimeters can be measured, and results with high reproducibility and high resolvability can be obtained.

In an exemplary embodiment of the present specification, the negative electrode active material layer including the silicon-based active material may further include a carbon-based active material. In this case, the silicon-based active material may be included in an amount of 1 to 40 parts by weight, for example, 1 to 20 parts by weight, based on a total of 100 parts by weight of the active material included in the negative electrode active material layer including the silicon-based active material.

In an exemplary embodiment of the present specification, the carbon-based active material may be graphite, and the graphite may be natural graphite, graphite graphite, or a mixture thereof. The carbon-based active material may be included in an amount of 60 parts by weight or more and 99 parts by weight or less on the basis of 100 parts by weight of a total of the negative electrode active material included in the negative electrode active material layer.

In an exemplary embodiment of the present specification, the negative electrode active material in 100 parts by weight of the negative electrode active material layer may be included in an amount of 80 parts by weight or more and 99.9 parts by weight or less, preferably 90 parts by weight or more and 99.9 parts by weight or less, more preferably 95 parts by weight or more and 99.9 parts by weight or less, and most preferably 98 parts by weight or more and 99.9 parts by weight or less.

According to an additional exemplary embodiment of the present specification, the negative electrode active material layer may further include a negative electrode binder, in addition to the active material.

The negative electrode binder may serve to improve adhesion between particles of the negative electrode active material and adhesive force between particles of the negative electrode active material and the negative electrode current collector. For the negative electrode binder, those known in the art may be used. Non-limiting examples thereof may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

The negative electrode binder may be included in an amount of 0.1 part by weight or more and 20 parts by weight or less, for example, preferably 0.3 part by weight or more and 20 parts by weight or less, and more preferably 0.5 part by weight or more and 10 parts by weight or less on the basis of 100 parts by weight of the negative electrode active material layer.

The negative electrode active material layer may not include a conductive material, but may further include a conductive material if necessary. The conductive material included in the negative electrode active material layer is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; a conductive tube such as a carbon nanotube; fluorocarbon powder; metal powders such as aluminum, and nickel powders; a conductive whisker such as zinc oxide and potassium titanate; a conductive metal oxide such as titanium oxide; a conductive material such as polyphenylene derivative, and the like may be used. A content of the conductive material in the negative electrode active material layer may be 0.01 part by weight to 20 parts by weight, and preferably 0.03 part by weight to 18 parts by weight on the basis of 100 parts by weight of the negative electrode active material layer.

In an exemplary embodiment of the present specification, a thickness of the negative electrode active material layer may be 50 µm or greater and 500 µm or less.

In an exemplary embodiment of the present specification, the negative electrode current collector is not particularly limited as long as it has conductivity without causing a chemical change in the battery. For example, for the current collector, copper, stainless steel, aluminum, nickel, titanium, fired carbon, aluminum or stainless steel each surface-treated with carbon, nickel, titanium, silver, or the like, or the like may be used. Specifically, transition metals that adsorb carbon well, such as copper and nickel, may be used for the current collector. A thickness of the current collector may be 1 µm to 500 µm. However, the thickness of the current collector is not limited thereto.

The positive electrode and the negative electrode can be manufactured according to a conventional method for manufacturing a positive electrode and a negative electrode, except using the positive electrode and negative electrode active materials described above. Specifically, the electrodes can be manufactured by applying a composition for active material layer formation, including the above-described active material and, optionally, a binder and a conductive material, onto a current collector, followed by drying and rolling. In this case, the types and contents of the positive electrode and negative electrode active materials, the binder, and the conductive material are as described above. The solvent may be a solvent commonly used in the art, such as dimethyl sulfoxide (DMSO), isopropyl alcohol, N-methylpyrrolidone (NMP), acetone, or water, and any one thereof or a mixture of two or more thereof may be used. A used amount of the solvent is sufficient if it can dissolve or disperse the active material, the conductive material, and the binder in consideration of an applied thickness of a slurry and a manufacturing yield, and then, allows for a viscosity capable of exhibiting excellent thickness uniformity when applied to manufacture a positive electrode and a negative electrode. Alternatively, the positive electrode and the negative electrode may be manufactured by laminating, on a current collector, a film obtained by casting the composition for active material layer formation on a separate support and peeling off it from the support.

An additional exemplary embodiment of the present specification provides a method for manufacturing the positive electrode for a secondary battery according to the above-described exemplary embodiments. The manufacturing method includes coating a first composition including a single particle positive electrode active material and a positive electrode active material with a larger particle diameter than that of the single particle positive electrode active material on a current collector and performing rolling to form a first positive electrode active material layer; and coating a second composition including a single particle positive electrode active material and a positive electrode active material with a larger particle diameter than that of the single particle positive electrode active material on the first positive electrode active material layer and performing rolling to form a second positive electrode active material layer to have a porosity different from a porosity of the first positive electrode active material layer.

The compositions for forming the first and second positive electrode active material layers may each further include the above-described binder, a conductive material, and the like, in addition to the above-described positive electrode active material. If necessary, the above-mentioned solvent may be further included.

In the above manufacturing method, rolling is performed after performing coating at each step when forming the first and second positive electrode active material layers. By adjusting the rolling conditions at each stage, the porosity of each positive electrode active material layer can be controlled. For example, a condition may be applied in which a linear pressure during rolling in the step of forming the second positive electrode active material layer is higher than a linear pressure during rolling in the step of forming the first positive electrode active material layer. Specifically, the first positive electrode active material layer may be rolled at a low linear pressure, for example, 1 to 1.5 ton/cm, and the second positive electrode active material layer may be further rolled at a high linear pressure, for example, 1.5 to 2.5 ton/cm.

The type of active material of each positive electrode active material layer described above and the manufacturing method in which separate rolling is performed when forming each positive electrode active material layer can enable the porosity of the first positive electrode active material layer to be different from, and specifically, smaller than that of the second positive electrode active material layer.

The separator serves to separate the negative electrode and the positive electrode and to provide a migration path of lithium ions, any separator may be used as the separator without particular limitation as long as it is typically used in a secondary battery, and particularly, a separator having high moisture-retention ability for an electrolyte solution as well as a low resistance against migration of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a usual porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

Examples of the electrolyte may include, but are not limited to, an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte solution, in which, for example, one or more selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving life characteristics of the battery, suppressing a decrease in battery capacity, improving discharge capacity of the battery, and the like, in addition to the above-described electrolyte components.

The secondary battery according to an exemplary embodiment of the present invention includes an assembly including a positive electrode, a negative electrode, a separator, and an electrolyte, and may be a lithium secondary battery.

A further exemplary embodiment of the present invention provides a battery module including the aforementioned secondary battery as a unit cell, and a battery pack including the battery module. Since the battery module and the battery pack include the secondary battery having high capacity, high rate capability, and high cycle characteristics, the battery module and the battery pack may be used as a power source of a medium and large sized device selected from the group consisting of an electric vehicle, a hybrid electric vehicle, a plug-in hybrid electric vehicle, and a power storage system.

Since the secondary battery according to the exemplary embodiments of the present invention stably exhibits excellent discharge capacity, output characteristics, and cycle performance, the secondary battery can be used as a power source of a portable device such as a mobile phone, a laptop computer, and a digital camera as well as a medium to large sized device selected from the group consisting of an electric vehicle, a hybrid electric vehicle, a plug-in hybrid electric vehicle and a power storage system. For example, the battery module or battery pack may be used as a power source of a medium to large sized device of any one or more of a power tool; an electric vehicle including an electric vehicle (EV), a hybrid electric vehicle, and a plug-in hybrid electric vehicle (PHEV); or a power storage system.

### Mode for Invention

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

### Example 1

Slurries for forming a first positive electrode active material layer and a second positive electrode active material layer on a positive electrode current collector were prepared, respectively, and coating was performed as follows. After coating the first positive electrode active material layer, it was dried at a speed of 30 m/min through a drying oven. Then, the linear pressure was adjusted and hot rolling was performed at a temperature of 90°C. Subsequently, the second positive electrode active material layer was coated using the same method, and the linear pressure was adjusted and hot rolling was performed at a temperature of 90°C, whereby an electrode including the first positive electrode active material layer with a porosity of 20% and the second positive electrode active material layer with a porosity of 24% was prepared.

As compositions for preparing the first positive electrode active material layer and the second positive electrode active material layer, a positive electrode slurry obtained by adding a Ni-based positive electrode active material, a conductive material (CNT), and a binder (PVDF) to a methylpyrrolidone (NMP) solvent at a weight ratio of 97.0:1:2 was used. The Ni-based positive electrode active material of the composition for the first positive electrode active material layer included a single particle positive electrode active material and a large particle positive electrode active material at a weight ratio of 8:2, and the Ni-based positive electrode active material of the composition for the second positive electrode active material layer included a single particle positive electrode active material and a large particle positive electrode active material at a weight ratio of 2:8.

For the single particle positive electrode active material, a Ni-based positive electrode active material having a composition of Li_{1.0}Ni_{0.86}CO_{0.08}Mn_{0.06}O₂ and a particle diameter of 4 µm was used, and for the large particle positive electrode active material, a Ni-based positive electrode active material having a composition of Li_{1.0}Ni_{0.87}Co_{0.04}Mn_{0.007}Al_{0.02}O₂ and a particle diameter of 9 µm was used.

The porosities of the positive electrodes prepared above are shown in Table 1 below.

A composition including a negative electrode slurry obtained by adding a negative electrode active material including SiO-based and carbon-based (including artificial graphite and natural graphite) active materials (SiO-based active material was included in an amount of 5 parts by weight based on 100 parts by weight of the total negative electrode active material), a conductive material (carbon black), a binder (SBR) and a thickener (CMC) to a distilled water solvent at a weight ratio of 96:1:2:1 was coated on the negative electrode current collector, which was then dried and rolled to prepare a negative electrode.

The positive electrode and the negative electrode were stacked with a separator interposed therebetween, and an electrolyte solution having a composition of 1M LiPF₆, ethylene carbonate (EC)/ethyl methyl carbonate (EMC) (volume ratio 3/7), vinylene carbonate (VC)/propane sultone (PS) (included in amounts of 3 parts by weight and 1.5 parts by weight, respectively, based on 100 parts by weight of total electrolyte) was injected to prepare a battery.

### Example 2

The same procedure as in Example 1 was performed except that the porosity of the first positive electrode active material layer was 30% lower than that of the second positive electrode active material layer.

### Example 3

The same procedure as in Example 1 was performed except that the weight ratio of the single particle positive electrode active material and the large particle positive electrode active material in the first positive electrode active material layer was 2:8 and the weight ratio of the single particle positive electrode active material and the large particle positive electrode active material in the second positive electrode active material layer was 8:2.

### Comparative Example 1

The same procedure as in Example 1 was performed except that the coating of the first positive electrode active material layer was performed using one type of slurry including the single particle positive electrode active material and the large particle positive electrode active material at a weight ratio of 8:2.

### Comparative Example 2

The positive electrode active material layers of two layers having the same porosity were prepared under the following process conditions.

The slurries of the first positive electrode active material layer and the second positive electrode active material layer were prepared and coated on the positive electrode current collector, as follows. After coating each layer of the first and second positive electrode active material layers, they were dried at a speed of 30 m/min through a drying oven. Then, the linear pressure was adjusted and hot rolling was performed at a temperature of 90°C to produce an electrode with a porosity of 24%.

The same procedure as in Example 1 was performed except that the slurries were prepared while the weight ratio of the single particle positive electrode active material and the large particle positive electrode active material of the first positive electrode active material layer was set to 2:8 and the weight ratio of the single particle positive electrode active material and the large particle positive electrode active material of the second positive electrode active material layer was set to 8:2.

### Comparative Example 3

The two-layered positive electrode active material layers having the same porosity were prepared through the following process.

The slurries of the first positive electrode active material layer and the second positive electrode active material layer were prepared and coated on the positive electrode current collector, as follows. After coating each layer of the first and second positive electrode active material layers at the same time, they were dried at a speed of 30 m/min through a drying oven. Then, the linear pressure was adjusted and hot rolling was performed at a temperature of 90°C to produce an electrode with a porosity of 24%.

The same procedure as in Example 1 was performed except that the Ni-based positive electrode active material layer of the composition for the first positive electrode active material layer included a single particle positive electrode active material and a large particle positive electrode active material at a weight ratio of 8:2 and the Ni-based positive electrode active material of the composition for the second positive electrode active material layer was prepared using the slurry including a single particle positive electrode active material and a large particle positive electrode active material at a weight ratio of 2:8.

### Comparative Example 4

The positive electrode active material layers of two layers having the same porosity were prepared through the following process.

The slurries of the first positive electrode active material layer and the second positive electrode active material layer were prepared and coated on the positive electrode current collector, as follows. After coating each layer of the first and second positive electrode active material layers at the same time, they were dried at a speed of 30 m/min through a drying oven. Then, the linear pressure was adjusted and hot rolling was performed at a temperature of 90°C to produce an electrode with a porosity of 24%.

The same procedure as in Example 1 was performed except that the Ni-based positive electrode active material of the composition for the first positive electrode active material layer included a single particle positive electrode active material and the Ni-based positive electrode active material of the composition for the second positive electrode active material layer was prepared using the slurry including a single particle positive electrode active material and a large particle positive electrode active material at a weight ratio of 2:8.

### Comparative Example 5

The positive electrode active material layers of two layers having the same porosity were prepared through the following process.

The slurries of the first positive electrode active material layer and the second positive electrode active material layer were prepared and coated on the positive electrode current collector, as follows. After coating each layer of the first and second positive electrode active material layers at the same time, they were dried at a speed of 30 m/min through a drying oven. Then, the linear pressure was adjusted and hot rolling was performed at a temperature of 90°C to produce an electrode with a porosity of 24%.

The same procedure as in Example 1 was performed except that the Ni-based positive electrode active material of the composition for the first positive electrode active material layer included a single particle positive electrode active material and a large particle positive electrode active material at a weight ratio of 8:2 and the Ni-based positive electrode active material of the composition for the second positive electrode active material layer was prepared using the slurry including a single particle positive electrode active material.

**[Table 1]**

| | Porosity (%) of second positive electrode active material layer | Porosity (%) of first positive electrode active material layer | Pore area ratio in cross-sectional image of second positive electrode active material layer /pore area ratio in cross-sectional image of first positive electrode active material layer |
|---|---|---|---|
| Example 1 | 24 | 20 | 1.5 |
| Example 2 | 50 | 20 | 2.5 |
| Example 3 | 24 | 20 | 1.5 |
| Comparative Example 1 | 24 | | - |
| Comparative Example 2 | 24 | 24 | 1.0 |
| Comparative Example 3 | 24 | 24 | 1.0 |
| Comparative Example 4 | 24 | 24 | 1.0 |
| Comparative Example 5 | 24 | 24 | 1.0 |

FIG. 1 shows the resistance values as a function of state of charge (SOC) of the batteries prepared in Examples 1 to 3 and Comparative Examples 1 to 5. It can be confirmed that Examples 1 to 3 exhibit excellent resistance characteristics at the overall state of charge (SOC) compared to Comparative Examples 1 to 5. In this case, the resistance was measured by subjecting the prepared cell to constant current/constant voltage (CC/CV) charge (0.05C-cut) at 0.33C to 4.2V and constant current (CC) discharge (2.5V-cut) at 0.33C 3 times, discharging the cell to 0.33C after charging, setting each SOC(%) and proceeding with pulse discharge at 2.5C for 10 seconds.

## Claims

1. A positive electrode for a secondary battery, comprising:
a current collector;
a first positive electrode active material layer provided on the current collector; and
a second positive electrode active material layer provided on the first positive electrode active material layer,
wherein the first positive electrode active material layer and the second positive electrode active material layer each comprise a single particle positive electrode active material and a positive electrode active material with a larger particle diameter than that of the single particle positive electrode active material, and
wherein a porosity of the first positive electrode active material layer is different from a porosity of the second positive electrode active material layer.

2. A positive electrode for a secondary battery, comprising:
a current collector;
a first positive electrode active material layer provided on the current collector; and
a second positive electrode active material layer provided on the first positive electrode active material layer,
wherein the first positive electrode active material layer and the second positive electrode active material layer each comprise a single particle positive electrode active material and a positive electrode active material with a larger particle diameter than that of the single particle positive electrode active material, and
wherein a pore area ratio in a cross-sectional image of the second positive electrode active material layer is 1.05 to 3 times a pore area ratio in a cross-sectional image of the first positive electrode active material layer.

3. The positive electrode for a secondary battery of claim 1, wherein the porosity of the first positive electrode active material layer is smaller than the porosity of the second positive electrode active material layer.

4. The positive electrode for a secondary battery of claim 1, wherein the porosity of the first positive electrode active material layer is 0.5% to 25% lower than the porosity of the second positive electrode active material layer.

5. The positive electrode for a secondary battery of claim 1, wherein the porosities of the first positive electrode active material layer and the second positive electrode active material layer are 15% to 40%, respectively.

6. The positive electrode for a secondary battery of claim 1, wherein the positive electrode active material with a larger particle diameter than that of the single particle positive electrode active material in the first and second positive electrode active material layers has a particle diameter 2 to 15 µm larger than that of the single particle positive electrode active material.

7. The positive electrode for a secondary battery of claim 1, wherein a content ratio of the single particle positive electrode active material and the positive electrode active material with a larger particle diameter than that of the single particle positive electrode active material in the first and second positive electrode active material layers is 1:9 to 9:1.

8. The positive electrode for a secondary battery of claim 1, wherein a content of the single particle positive electrode active material in the first positive electrode active material layer is greater than a content of the single particle positive electrode active material in the second positive electrode active material layer.

9. The positive electrode for a secondary battery of claim 1, wherein a content ratio of the single particle positive electrode active material and the positive electrode active material with a larger particle diameter than that of the single particle positive electrode active material in the first positive electrode active material layer is 5:5 to 9:1, and a content ratio of the single particle positive electrode active material and the positive electrode active material with a larger particle diameter than that of the single particle positive electrode active material in the second positive electrode active material layer is 1:9 to 5:5.

10. The positive electrode for a secondary battery of claim 1, wherein the first and second positive electrode active material layers comprise a lithium composite transition metal compound comprising nickel (Ni) and cobalt (Co).

11. The positive electrode for a secondary battery of claim 10, wherein the lithium composite transition metal compound further comprises at least one of manganese and aluminum.

12. A secondary battery comprising the positive electrode of any one of claims 1 to 11, a negative electrode, and a separator.

13. The secondary battery of claim 12, wherein the negative electrode comprises a silicon-based active material.

14. The secondary battery of claim 13, wherein the negative electrode further comprises a carbon-based active material.

15. A method for manufacturing the positive electrode for a secondary battery of any one of claims 1 and 3 to 11, the method comprising:
coating a first composition comprising a single particle positive electrode active material and a positive electrode active material with a larger particle diameter than that of the single particle positive electrode active material on a current collector and performing rolling to form a first positive electrode active material layer; and
coating a second composition comprising a single particle positive electrode active material and a positive electrode active material with a larger particle diameter than that of the single particle positive electrode active material on the first positive electrode active material layer and performing rolling to form a second positive electrode active material layer to have a porosity different from a porosity of the first positive electrode active material layer.

16. The method of claim 15, wherein a linear pressure during rolling in the forming the second positive electrode active material layer is higher than a linear pressure during rolling in the forming the first positive electrode active material layer.
